Europäisches Patentamt

European Patent Office

Office européen des brevets

(11) Veröffentlichungsnummer: **0 179 735**
**A2**

## (12) EUROPÄISCHE PATENTANMELDUNG

(21) Anmeldenummer: 85730138.6

(22) Anmeldetag: 10.10.85

(51) Int. Cl.⁴: **B 65 G 47/24**

(30) Priorität: 20.10.84 DE 3438835

(43) Veröffentlichungstag der Anmeldung:
30.04.86 Patentblatt 86/18

(84) Benannte Vertragsstaaten:
AT BE CH DE FR GB IT LI LU NL SE

(71) Anmelder: Schiepe Stapelautomaten GmbH
Haynauer-Strasse 72a
D-1000 Berlin 46(DE)

(72) Erfinder: Pfeiffer, Ulrich
Bernauer-Strasse 108 A
D-1000 Berlin 49(DE)

(74) Vertreter: Lüke, Dierck-Wilm, Dipl.-Ing.
Gelfertstrasse 56
D-1000 Berlin 33(DE)

(54) Vorrichtung zum mittigen Ausrichten von auf einem Endlosförderer zugeführten Bauteilen unterschiedlicher Länge zur einer Bahnmarke des Endlosförderers.

(57) Eine Vorrichtung zum mittigen Ausrichten von auf einem Endlosförderer in Form eines Rollganges 11 zugeführten Bauteilen 30 bis 37 unterschiedlicher Länge zu einer Bahnmarke 14 des Endlosförderers, insbesondere zum mittigen Ausrichten von Rahmenteilen für Fenster an der Übergabestelle zu einem Stapelautomaten 17 ist dadurch gekennzeichnet, daß in Längsrichtung des Endlosförderers 11 vor und hinter der Bahnmarke 14 und in Abständen voneinander mit einer elektrischen Steuerschaltung verbundene Meßelemente ( Fotozellen 1 bis 5 ) zum Erkennen der Lage der Bauteile 30 bis 37 auf dem Endlosförderer 11 angeordnet sind, daß die Meßelemente in Form der Fotozellen von der Vorlaufkante 6 eines jeden Bauteiles 30 bis 37 nacheinander eingeschaltet werden, und daß die Steuerschaltung bei gleicher Anzahl von vor und hinter der Bahnmarke 14 eingeschalteten Meßelementen den Antrieb der Rollen 13 des Endlosförderers abschaltet, sobald ein vor der Bahnmarke 14 gelegenes Meßelement von der Nachlaufkante 7 des Bauteiles 30 bis 37 freigegeben wird.

FIG. 1

Albrecht & Lüke, Gelfertstr. 56, D-1000 Berlin 33

# Patentanwälte
# Dipl.-Ing. Hans Albrecht (1933/1979)
# Dipl.-Ing. Dierck-Wilm Lüke
European Patent Attorney

Gelfertstraße 56
D-1000 Berlin 33
Telefon: (030) 8313028
Telegramme: Patentalbrecht Berlin

| Ihr Zeichen | Ihre Nachricht | Unser Zeichen | Datum |
|---|---|---|---|
| | | 10859 L/Mü | 10.Oktober 1985 |

Schiepe Stapelautomaten GmbH

Haynauer-Str. 72a-74, 1000 Berlin 46

-------------------------------------------------------

Vorrichtung zum mittigen Ausrichten von auf einem Endlosförderer zugeführten Bauteilen unterschiedlicher Länge zu
einer Bahnmarke des Endlosförderers

-------------------------------------------------------

Die Erfindung bezieht sich auf eine Vorrichtung zum mittigen
Ausrichten von auf einem Endlosförderer zugeführten Bauteilen
unterschiedlicher Länge zu einer Bahnmarke des Endlosförderers,
insbesondere zum mittigen Ausrichten von Rahmenteilen für
Fenster an der Übergabestelle zu einem Stapelautomaten.

Eine bekannte Vorrichtung dieser Art benötigt zum mittigen
Ausrichten der zugeführten Bauteile unterschiedlicher Länge
zu der Bahnmarke einen Endlosförderer, der aus drei Förderbändern gebildet ist. Dabei schließt sich an das Ende des
horizontal verlaufenden ersten Förderbandes ein schräg nach
oben gerichtetes Förderband an, an dessen Ende wiederum das
horizontal verlaufende dritte Förderband anschließt. Ein
zugefördertes Bauteil, insbesondere ein Rahmenteil für
Fenster, wird über das erste Förderband horizontal gefördert, bis die Vorlaufkante des Bauteiles auf das zweite, schräge Förderband aufläuft. Auf diesem wird anschließend die Vorlaufkante schräg nach aufwärts gefördert, wobei das Bauteil vom ersten, horizontalen Förderband abgehoben wird. Die Vorlaufkante des Bauteiles wird dann über das Ende des zweiten, schrägen Förderbandes hinaus in den Raum oberhalb des dritten, horizontalen Förderbandes gefördert, ohne dieses jedoch zunächst zu berühren. Sobald der Schwerpunkt des Bauteiles das obere Ende des zweiten, schrägen Förderbandes erreicht und überschritten hat, klappt das Bauteil über das obere Ende des zweiten, schrägen Förderbandes herum, wird vom ersten, horizontalen Förderband abgehoben und kommt anschließend mit seiner vorlaufenden Hälfte zwischen Vorlaufkante und Schwerpunkt auf dem dritten, horizontalen Förderband zur Auflage. Genau im Zeitpunkt des Umkippens ist das Bauteil mittig zum oberen Ende des zweiten, schrägen Förderbandes ausgerichtet, welches die Bahnmarke des Endlosförderers bildet. In diesem Zeitpunkt ist das Bauteil mittig zur Bahnmarke ausgerichtet und kann seitlich vom Endlosförderer abgeschoben werden. Die bekannte Vorrichtung zum mittigen Ausrichten der auf einem Endlosförderer zugeführten Bauteile unterschiedlicher Länge zu einer Bahnmarke des Endlosförderers erfordert einerseits aufgrund der notwendigen drei Förderbänder einen hohen Bauaufwand und ermöglicht andererseits kein genaues mittiges Ausrichten der Bauteile zur Bahnmarke, da insbesondere Bauteile größerer Länge nur mit erheblichen Toleranzabweichungen und damit nicht mittig ausgerichtet werden können. Ferner ist aufgrund der zwangsläufig zu verwendenden Förderbänder ein Querabschieben der Bauteile vom Endlosförderer erforderlich.

Der Erfindung liegt von daher die Aufgabe zugrunde, ein genaues mittiges Ausrichten der auf einem Endlosförderer zugeführten Bauteile unterschiedlicher Länge zu der Bahnmarke des Endlosförderers zu ermöglichen, wobei die Vorrichtung insbesondere mit geringem Bauaufwand herstellbar sein soll.

Zur Lösung dieser Aufgabe sieht die Erfindung vor, daß in Längsrichtung des Endlosförderers vor und hinter der Bahnmarke und in Abständen voneinander mit einer Steuerschaltung verbundene Meßelemente zum Erkennen der Lage der Bauteile auf dem Längsförderer angeordnet sind, daß die Meßelemente von der Vorlaufkante eines jeden Bauteiles nacheinander eingeschaltet werden und daß die Steuerschaltung bei gleicher Anzahl von vor und hinter der Bahnmarke eingeschalteten Meßelementen den Antrieb des Endlosförderers ausschaltet, sobald ein vor der Bahnmarke gelegenes Meßelement von der Nachlaufkante des Bauteiles freigegeben wird. Die erfindungsgemäße Vorrichtung benötigt nur einen einzigen Endlosförderer, der sich lediglich in einer im wesentlichen horizontalen Ebene erstreckt. Durch die Anordnung der Meßelemer am Endlosförderer und zwar vor und hinter der Bahnmarke und in Abständen voneinander, sowie die Verbindung der einzelnen Meßelemente mit einer Steuerschaltung wird in bautechnisch und schaltungstechnisch einfacher Weise ermöglicht, daß die Lage des auf dem Endlosförderer geförderten Bauteiles mittig zur Bahnmarke, welche am Endlosförderer angebracht ist, schnell festgestellt werden kann, wobei im Augenblick der mittigen Ausrichtung des Bauteiles zur Bahnmarke über die Steuerschaltung der Antrieb des Endlosförderers ausgeschaltet wird.

In schaltungstechnisch einfacher Weise bilden je ein im gleichen Abstand zur Bahnmarke vor und hinter dieser angeordnetes Meßelement ein Meßelementenpaar, dessen Steuerausgänge in Reihe in der Spannungsversorgung für den Antriebsstop des Endlosförde s liegen, und ferner ist in dem Steuerausgang eines jeden hinter der Bahnmarke gelegenden Meßelementes eines jeden Meßelementen paares der Steuereingang des vor dem diesem Meßelementenpaar zugeordneten, vor der Bahnmarke gelegenen Meßelementes geschaltet. Hierdurch wird in einfacher schaltungstechnischer Weise erreicht, daß der Antrieb des Endlosförderers ausgeschaltet wird, sobald das vor der Bahnmarke gelegene Meßelement eines Meßelementenpaares, welches vor dem, diesem Meßelementenpaar zugeordneten , vor der Bahnmarke gelegenen Meßelement geschaltet ist, von der Nachlaufkante des Bauteiles freigegeben wird. Eine solche Steuerschaltung benötigt keine aufwendige Steuerelektronik, sondern kann mit herkömmlichen elektrischen und elektronischen Schaltungselementen ausgeführt werden.

In besonders bevorzugter Weise sind die Meßelemente als Fotozellen ausgebildet. Es können wahlweise Fotozellen mit oder ohne Reflektor verwendet werden.

Schließlich ist in besonders bevorzugter Weise der Endlosförderer als Rollgang mit angetriebenen Rollen ausgebildet, wobei die einzelnen Rollen des Rollganges mit einer Gummibeschichtung mit hohem Reibungskoeffizienten beschichtet sind. Ein solcher Rollgang kann mit nur einseitig gelagerten Rollen ausgebildet sein, wobei die Umlaufförderer eines Stapelautomaten zwischen die einzelnen Rollen..greifen können und die beiden Umlaufförderer symmetrisch zur Bahnmarke des als Rollgang ausgebildeten Endlosförderers angeordnet sind.

Die Erfindung ist nachfolgend anhand eines in den Zeichnungen dargestellten Ausführungsbeispieles einer Vorrichtung zum mittigen Ausrichten von auf einem Endlosförderer zugeführten Bauteilen unterschiedlicher Länge zu einer Bahnmarke des Endlosförderers näher erläutert. Es zeigen:

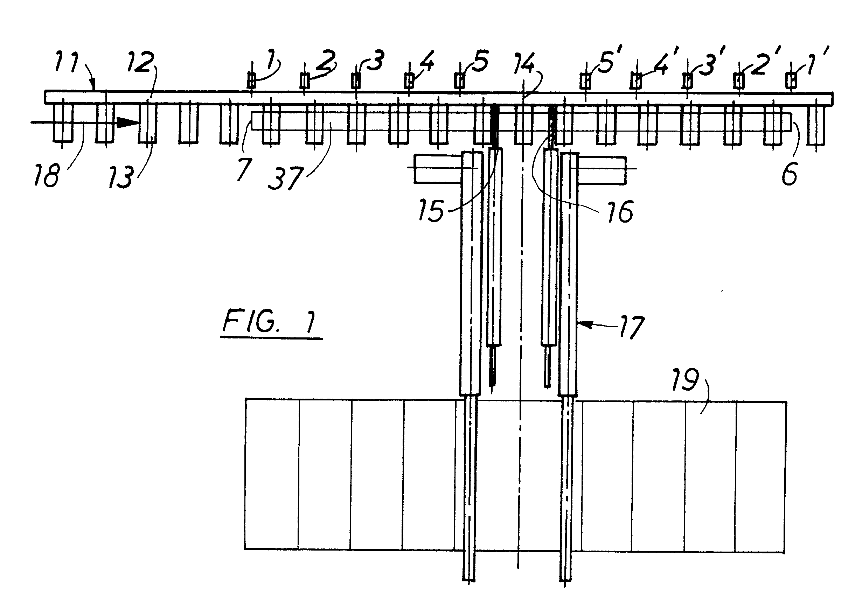

Fig. 1   eine Draufsicht auf den Endlosförderer mit symmetrisch zur Bahnmarke aufgestelltem Stapelautomaten,

Fig. 2   eine Stirnansicht auf den aus einem Rollgang gebildeten Endlosförderer mit oberhalb der Rollen angeordneten Fotozellen als Meßelementen,

Fig. 3   eine Prinzip- Draufsicht auf die mittig zur Bahnmarke ausgerichteten Bauteile unterschiedlicher Länge und

Fig. 4  einen Schaltungsplan der Steuerschaltung für die
Fotozellen und den Antrieb des Rollganges.

Die Vorrichtung umfaßt einen Rollgang 11 aus einem Träger 12 und einer Anzahl in diesem einseitig gelagerter Rollen 13. Die Rollen 13 sind in nicht näher dargestellter Weise mit einer Beschichtung aus Gummi von hohem Reibungskoeffizienten versehen. Die einseitige Lagerung erfolgt in bekannter Weise im Träger 12, in welchem auch Antriebsketten für die auf den einzelnen Rollen 13 angebrachten, nicht dargestellten Kettenräder geführt sind. Die Antriebsketten werden von einem ebenfalls nicht dargestellten Antrieb betrieben, der mit einem elektrischen Stop K 213 versehen ist .
Der Rollgang 11 weist eine Bahnmarke 14 auf, welche mittig zu den Umläufförderern 15,16 eines Stapelautomaten 17 angeordnet ist. Der Stapelautomat 17 kann dem im DE- GM 77 24 470    dargestellten und beschriebenen Stapelautomaten entsprechen, auf welchen ausdrücklich verwiesen wird .

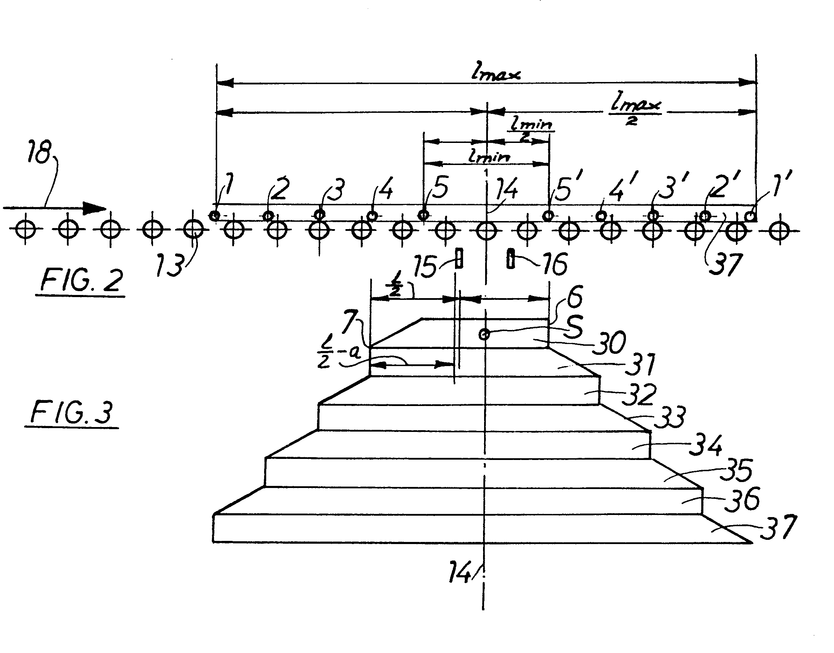

In Längsrichtung des einen Endlosförder mit Förderrichtung gemäß Pfeil 18 bildenden Rollganges 11 sind vor und hinter der Bahnmarke 14 und in Abständen voneinander als Meßelemente dienende Fotozellen 1 bis 5 und 5' bis 1' angeordnet. Die Fotozellen 1 bis 5 sind in Förderrichtung ( Pfeil 18 ) vor der Bahnmarke 14 und die Fotozellen 5' bis 1' in Förderrichtung ( Pfeil 18 ) hinter der Bahnmarke 14 angeordnet. Die Fotozellen 1 bis 5 und 5' bis 1' sind jeweils oberhalb der Ebene der einzelnen Rollen 13 angeordnet, wie es in Figur 2 im Prinzip dargestellt ist, so daß das Vorhandensein oder Nichtvorhandensein eines Bauteiles, insbesondere eines Rahmenteiles für Fenster auf dem Rollgang 11 festgestellt werden kann.

Wie es in Figur 2 dargestellt ist, bildet der Abstand zwischen den der Bahnmarke 14 nächstgelegenen Fotozellen 5, 5' gleichzeitig die kleinste Länge $L_{min}$ für ein Bauteil, wobei der Abstand zwischen den am weitesten von der Bahnmarke 14 abgelegenen Fotozellen 1, 1' die Länge $L_{max}$ für die größte Länge eines Bauteiles anzeigt , welches mit der Vorrichtung mittig zur Bahnmarke 14 ausgerichtet werden kann .

Die Fig. 3 zeigt die Lage der zur Bahnmarke 14 mittig ausgerichteten Bauteile 30 bis 37 zu den Mitnehmern 15, 16 der beiden Umlaufförderer des Stapelautomaten 17. Da es sich bei den Bauteilen 30 bis 37 um Rahmenteile für Fenster handelt, welche angeschrägte Flächen aufweisen, muß die Ausrichtung der Bauteile 30 bis 37 mit dem Schwerpunkt S in der Bahnmarke 14 erfolgen.

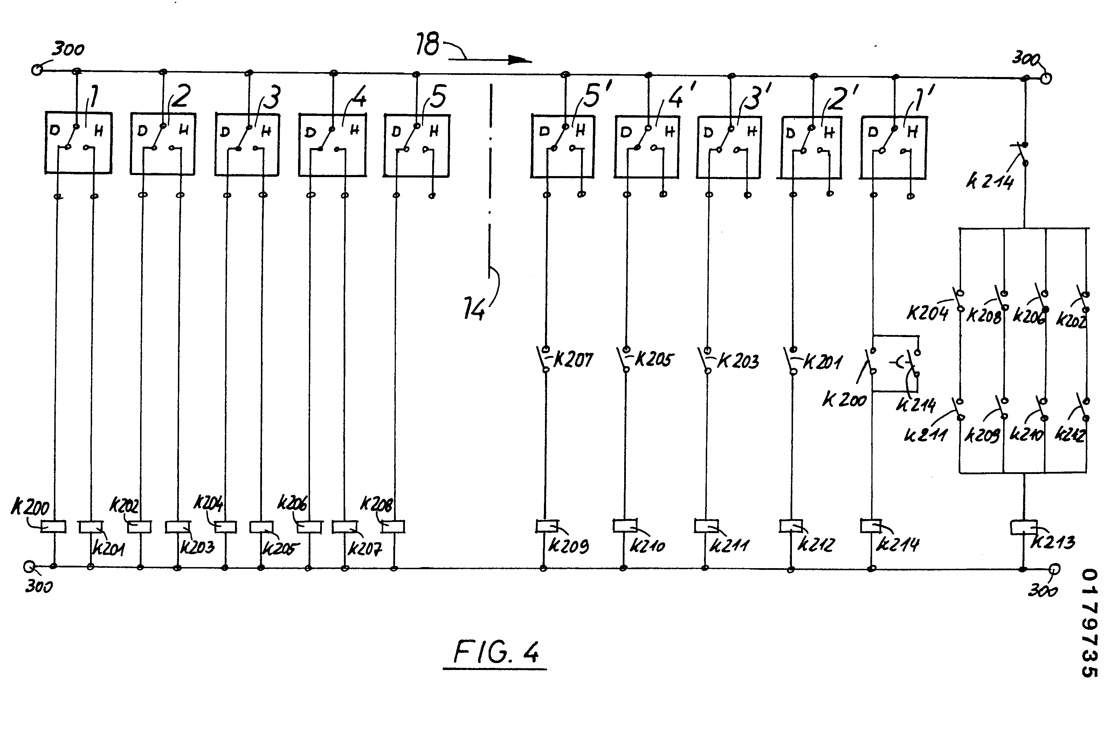

Die Steuerschaltung für die Fotozellen 1 bis 5; 5' bis 1' und für den Stopkontakt K 213 des Antriebs des als Endlosförderer dienenden Rollganges 11 ist in Fig. 4 dargestellt. Diese zeigt die einzelnen Fotozellen 1 bis 5 links von der mittigen Bahnmarke 14 und 5' bis 1' rechts von der Bahnmarke 14, wobei die Förderrichtung mit dem Pfeil 18 dargestellt ist. Die Förderrichtung verläuft somit von links nach rechts. Jede Fotozelle 1 bis 5 und 5' bis 1' umfaßt einen Anschluß 300 für die Spannungsversorgung, sowie Kontakte K 200, K 201 bei der Fotozelle 1, K 202 , K 203 bei der Fotozelle 2, K 204, K 205 bei der Fotozelle 3, K 206, K 207 bei der Fotozelle 4 und K 208 bei der Fotozelle 5 sowie je einen Kontakt K 209 bei der Fotozelle 5' , K 210 bei der Fotozelle 4' , K 211 bei der Fotozelle 3' , K 212 bei der Fotozelle 2' und K 214 bei der Fotozelle 1' . Die Kontakte K 200, K202, K204, K 206, K 208, K 209, K 210, K 211, K 212, K 214 sind jeweils erregt bzw. eingeschaltet, wenn die Fotozelle durch ein vorbeilaufendes Bauteil dunkel ist, d.h. der Fotozellenkontakt in der Stellung " D " steht. Die Kontakte K 201, K 203, K 205 und K 207 sind jeweils voll erregt bzw. eingeschaltet, wenn die Fotozellen 1 bis 5 nicht durch ein vorbeilaufendes Bauteil abgedunkelt sind, d.h. in ihrer Schaltstellung " H " stehen. Diese Steuereingänge K 207, K 205, K 203 und K 201 sind jeweils in die Verbindungsleitungen der Fotozellen
5' bis 1' zu deren jeweiligen Steuerausgängen K 209, K 210,
K 211, K 212 und K 214 eingeschaltet.

Wie es die Fig. 4 weiterhin zeigt, bildet je eine im gleichen
Abstand zur Bahnmarke 14 vor und hinter dieser angeordnete
Fotozelle 5,5'.; 4,4' ; 3,3' ; 2,2' ; 1,1' ein Meßelementenpaar, dessen Steuerausgänge K 208, K 209; K 206, K 210;
K 204,K 211 ; K 202, K212 und K 200, K214 jeweils in Reihe
in der Spannungsversorgung für den Antriebsstop K 213 des als Rollgang
11 ausgebildeten Endlosförderers liegen, wobei in den Steuereingang K 209, K 210, K 211, K 212, K 214 einer jeden hinter
der Bahnmarke 14 gelegenen Fotozelle 5' , 4' , 3' , 2' , 1' :
eines Meßelementenpaares der Steuereingang K 207, K 205,
K 203, K 201, K 200 der vor der, diesem Meßelementenpaares
zugeordneten, vor der Bahnmarke 14 gelegenen Fotozelle 4,3,
2,1 geschaltet ist.

Die in Fig. 4 dargestellte Steuerschaltung arbeitet wie folgt:

Das kürzeste Bauteil 30 durchläuft in Bewegungsrichtung
( Pfeil 18 ) zunächst nacheinander die Fotozellen 1 bis 5,
wobei die Vorlaufkante[6]des Bauteiles 30 die Fotozellen jeweils
von hell " H " auf dunkel " D " umschaltet. Solange die Vorlaufkante[6]noch nicht die hinter der Bahnmarke 14 gelegene
Fotozelle 5' erreicht hat, können die in Bewegungsrichtung (18)
vor der Bahnmarke(14)liegenden Fotozellen 1,2 und 3 sogar wieder
in ihre Stellung " H "   nach Passieren des Bauteiles 30
umgeschaltet werden, ohne daß die Steuerschaltung auf den
Antrieb des Rollganges 11 einwirkt. Bei Erreichen der Fotozelle
5' durch die Vorlaufkante[6]wird die Fotozelle 5' in ihre
Stellung dunkel " D " geschaltet. Gleichzeitig ist die Fotozelle 5 ebenfalls in Stellung dunkel " D " geschaltet, so daß
der Kontakt K 208 erregt ist. Sobald nun die Nachlaufkante 7
des Bauteiles 30 die Fotozelle 4 verläßt, wird die Fotozelle 4
in ihre Stellung hell " H " umgeschaltet und der Kontakt
K 207 wird erregt. Dieser ermöglicht, daß auch der Kontakt K 209 der Fotozelle 5' erregt wird, so daß die beiden in Reihe geschalteten Kontakte K 208 und K 209 Spannung von der Spannungsquelle 300 an den Stop K 213 für den Antrieb des Rollgangs 11 legen können, welcher somit den Rollgang 11 schlagartig anhält. Ein Durchrutschen des Bauteiles 30 auf den Rollen 13 des Rollganges 11 wird durch die Gummibeschichtung der Rollen 13 verhindert. Das Bauteil 30 kommt somit mit seiner Nachlaufkante[7] in Höhe der Fotozelle 4 zum Stillstand, wie es in den Figuren 2 und 3 gezeigt ist.

Entsprechend wirkt die Steuerschaltung bei dem Bauteil 34, dessen Vorlaufkante bis zur Fotozelle 3' über die Bahnmarke 14 durchläuft, bis die Fotozelle 2 in ihrer Stellung " H " umschaltet. In diesem Falle wird der Ausgangskontakt K 203 erregt. Dieser ermöglicht eine Erregung des Ausgangskontaktes K 211 der Fotozelle 3' . Gleichzeitig ist auch der Kontakt K 204 der Fotozelle 3 dieses Meßelementenpaares erregt, so daß durch die in Reihe geschalteten Kontakte K 204 und K 211 wiederum die Spannung 300 an den Stopkontakt K 213 für den Rollgang 11 angelegt werden kann.

Sofern ein Bauteil einer Länge über den Rollgang 11 gefördert wird, welche größer als $L_{max}$ ist, bewirkt dieses Bauteil, daß gleichzeitig die endseitigen Fotozellen 1 und 1' in ihrer Stellung dunkel " D " befindlich sind. Der dann eingeschaltete bzw. erregte Kontakt K 200 ermöglicht die Einschaltung bzw. Öffnung des Kontaktes K 214 der Fotozelle 1'und signalisiert somit die Überlänge eines Bauteiles. Ein solches Bauteil kann entweder ohne Stop des Rollganges 11 aus diesem herausgefahren werden oder dazu führen, daß ein Stop des Rollganges 11 und gleichzeitig ein Stillstand des Stapelautomaten 17 ausgelöst werden.

Die Einschaltung bzw. Erregung des Kontaktes K 213 bewirkt neben der Stllsetzung des Rollganges 11 den Start der Mitnehmer 15,16 des Stapelautomaten 17 , um das auf dem Rollgang 11 mittig ausgerichtete Bauteil 30 bis 37 dem zu bildenden Stapel 19 zuzuführen .

0179735

Albrecht & Lüke, Gelfertstr. 56, D-1000 Berlin 33

**Patentanwälte
Dipl.-Ing. Hans Albrecht ($^{1933}_{1979}$)
Dipl.-Ing. Dierck-Wilm Lüke**
European Patent Attorney

Gelfertstraße 56
D-1000 Berlin 33
Telefon: (030) 8313028
Telegramme: Patentalbrecht Berlin

| Ihr Zeichen | Ihre Nachricht | Unser Zeichen | Datum |
|---|---|---|---|
| | | 10859 L/Mü | 10.Oktober 1985 |

P a t e n t a n s p r ü c h e
-------------------------------------

1. Vorrichtung zum mittigen Ausrichten von auf einem Endlosförderer zugeführten Bauteilen unterschiedlicher Länge zu einer Bahnmarke des Endlosförderers, insbesondere zum mittigen Ausrichten von Rahmenteilen für Fenster an der Übergabestelle zu einem Stapelautomaten,

d a d u r c h   g e k e n n z e i c h n e t ,

daß in Längsrichtung des Endlosförderers ( Rollgang 11 ) vor und hinter der Bahnmarke ( 14 ) und in Abständen voneinander mit einer Steuerschaltung verbundene Meßelemente (1,1'bis 5 ,5') zum Erkennen der Lage der Bauteile ( 30 bis 37 ) auf dem Endlosförderer ( 11 ) angeordnet sind, daß alle Meßelemente ( 1 bis 5) vor der Bahnmarke (14) und eine je nach Länge des Bauteiles (30 bis 37) variierende Anzahl von Meßelementen (5' bis 1') hinter der Bahnmarke (14) von der Vorlaufkante (6) eines jeden Bauteiles (30 bis 37) nacheinander eingeschaltet werden, und daß die Steuerschaltung bei gleicher Anzahl von vor und hinter der Bahnmarke(14)eingeschalteter Meßelemente (1,1'bis 5,5') den Antrieb des Endlosförderers ( 11 ) ausschaltet, sobald ein vor der Bahnmarke ( 14 ) gelegenes Meßelement (1,1'bis 5,5') von der Nachlaufkante ( 7 ) des Bauteiles ( 30 bis 37 ) freigegeben wird , und den Stapelautomaten (17) einschaltet .

2. Vorrichtung nach Anspruch 1, dadurch gekennzeichnet, daß je ein im gleichen Abstand zur Bahnmarke ( 14 ) vor und hinter dieser angeordnetes Meßelement(1,1'bis 5,5')ein Meßelementenpaar bilden, dessen Steuerausgänge ( K 208, K 209; K 206,K 210; K 204, K 211; K 202, K 212 ) in Reihe in der Spannungsversorgung(300) für den Stop (K213)des Endlosförderers ( 11 ) liegen,und daß in dem Steuerausgang(K 209, K 210, K 211, K 212 ) eines jeden hinter der Bahnmarke ( 14 ) gelegenen Meßelementes ( 5' , 4' , 3' , 2' )     eines Meßelementenpaares  der Steuereingang ( K 207, K 205, K 203, K 201 ) des vor dem, diesem Meßelementenpaar  zugeordneten, vor der Bahnmarke ( 14 ) gelegenen Meßelementes ( 4,3,2,1 ) geschaltet ist.

3. Vorrichtung nach Anspruch 1 oder 2, dadurch gekennzeichnet, daß die Meßelemente (1,1'bis 5,5)als Fotozellen ausgebildet sind.

4. Vorrichtung nach einem der Ansprüche 1 bis 3, dadurch gekennzeichnet, daß der Endlosförderer als Rollengang ( 11 ) mit beschichteten Rollen ( 13 ) ausgebildet ist.

5. Vorrichtung nach Anspruch 4, dadurch gekennzeichnet, daß die Beschichtung der einzelnen Rollen ( 13 ) des Rollganges ( 11 ) eine Gummibeschichtung mit hohem Reibungskoeffizienten ist.

FIG. 1

0179735

$l_{max}$

$\dfrac{l_{max}}{2}$

$\dfrac{l_{min}}{2}$

$l_{min}$

18

1　2　3　4　5　14　5'　4'　3'　2'　1'

13

15　16

37

FIG. 2

$\dfrac{l}{2}$

$\dfrac{l}{2} - a$

7

6

S

30

31

32

33

34

35

36

37

14

FIG. 3

0179735

FIG. 4